# EUROPÄISCHE PATENTSCHRIFT

(11) **EP 2 664 905 B1**
(45) Veröffentlichungstag und Bekanntmachung des Hinweises auf die Patenterteilung: **24.08.2016**
(21) Anmeldenummer: 13167708.0
(22) Anmeldetag: 14.05.2013
(51) Int. Cl.: G01K 7/20

(54) **Temperaturmesseinrichtung, elektrisches Gerät mit einer solchen Temperaturmesseinrichtung und Verfahren zur Temperaturmessung**
Temperature measuring device, electrical apparatus equipped with such a temperature-measuring device and method for measuring temperature
Dispositif de mesure de température, appareil électrique doté d'un tel dispositif de mesure de la température et procédé de mesure de la température

(30) Priorität: 15.05.2012 DE 102012208125
(43) Veröffentlichungstag der Anmeldung: 20.11.2013
(73) Patentinhaber: E.G.O. Elektro-Gerätebau GmbH, 75038 Oberderdingen (DE)
(72) Erfinder: Fluhrer, Henry, 75015 Bretten (DE); Knappe, Gerd, 75015 Bretten (DE); Bayer, Ewald, 72358 Dormettingen (DE)
(74) Vertreter: Patentanwälte Ruff, Wilhelm, Beier, Dauster & Partner mbB

(56) Entgegenhaltungen:
- EP-A1- 2 428 781
- DE-A1- 4 312 395
- DE-A1- 4 343 747
- DE-A1-102004 035 014
- US-A1- 2010 198 546

## Beschreibung

### Anwendungsgebiet und Stand der Technik

Die Erfindung betrifft ein Verfahren zur Temperaturmessung, eine Temperaturmesseinrichtung für ein elektrisches Gerät, beispielsweise ein Kochgerät wie eine Fritteuse, sowie ein solches elektrisches Gerät mit einer Temperaturmesseinrichtung.

In elektrischen Geräten mit Temperaturmessung, wie beispielsweise den genannten Kochgeräten, kann die Temperaturmessung sehr sicherheitsrelevant sein, insbesondere bei den vorgenannten Fritteusen. Mittels Temperatursensoren soll eine zu hohe Temperatur vermieden werden, welche eine Unfallgefahr darstellt. Dabei können Temperatursensoren Fehlfunktionen aufweisen, beispielsweise durch Produktionsfehler beim Messwiderstand, durch Alterung oder durch sonstige Beschädigung.

Aus der DE 697 33 138 T2 ist es bekannt, dass sich ein Temperatursensor sozusagen selbst in der Temperaturmesseinrichtung prüft und dazu zwei Thermopaare und ein Widerstandssensor vorgesehen sind.

Aus der DE 43 12 395 A1 ist es bekannt, zur Erhöhung der Messgenauigkeit von Widerstandsthermometern zuerst eine Spannung bei Strom Null zu messen. Dann wird die Stromstärke um vorgegebene kleine Schritte erhöht, wobei bei jedem dieser Schritte die Spannung gemessen wird. Dabei wird von dieser gemessenen Spannung die Spannung bei Strom Null abgezogen. Dann wird eine bei diesem Widerstandsthermometer dem gemessenen Widerstand entsprechende Temperatur und die vom Sensor bei der Messung aufgenommene elektrische Leistung aus Spannung und Strom ermittelt. So kann eine tatsächliche Temperatur bestimmt werden. Dabei ist eine Vielzahl von Messungen bei jeweils unterschiedlichen Stromstärken und somit auch unterschiedlichen Spannungen notwendig.

Aus der EP 2 428 781 A1 ist es bekannt, mehrere Messspannungen zu verwenden bei einem Verfahren zur Temperaturmessung mit einer Temperaturmesseinrichtung mit einem elektrischen Widerstandselement. Dabei wird zwischen mindestens zwei unterschiedlichen Messspannungen zyklisch umgeschaltet.

Aus der DE 43 43 747 A1 ist es bekannt, eine Funktion eines Temperaturfühlers zu kontrollieren, indem dem Fühler eine Wechselspannung zur Selbstheizung überlagert wird. Kann dann ein vorgesehener Temperaturanstiegt erfasst werden, so wird die Wechselspannung wieder abgeschaltet. Dann ist nämlich offensichtlich, dass der Temperaturfühler durch die Beheizung seinen Widerstand geändert hat und somit noch funktioniert bzw. sowohl der Fühler als auch die Auswerteschaltung einwandfrei arbeiten.

Weitere Temperaturmesseinrichtungen sind aus der DE 10 2004 035 014 A1 und der DE 20 2009 003 889 U1 bekannt.

### Aufgabe und Lösung

Der Erfindung liegt die Aufgabe zugrunde, ein eingangs genanntes Verfahren zur Temperaturmessung, eine Temperaturmesseinrichtung sowie ein damit versehenes elektrisches Gerät zu schaffen, mit denen Probleme des Standes der Technik vermieden werden können und insbesondere bei einfachem Aufbau sowie einfacher Auswertung eine sichere und genaue Temperaturmessung möglich ist.

Gelöst wird diese Aufgabe durch ein Verfahren mit den Merkmalen des Anspruchs 1, durch eine Temperaturmesseinrichtung mit den Merkmalen des Anspruchs 5 sowie durch ein elektrisches Gerät mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der nachfolgend genannten Merkmale nur im Zusammenhang mit der Temperaturmesseinrichtung, dem Gerät oder dem Verfahren beschrieben. Sie sollen jedoch unabhängig davon sowohl für die Temperaturmesseinrichtung, das elektrische Gerät als auch für das Verfahren selbstständig gelten können. Der Wortlaut der Ansprüche wird durch ausdrückliche Bezugnahme zum Inhalt der Beschreibung gemacht.

Es ist vorgesehen, dass die Temperaturmesseinrichtung mindestens einen Temperatursensor als elektrischen Widerstand aufweist. Dieser Temperatursensor wird mit mindestens zwei unterschiedlichen Messspannungen beaufschlagt, wobei zwischen den Messspannungen umgeschaltet wird, vorteilhaft zyklisch bzw. regelmäßig. Besonders vorteilhaft wird mit beiden Messspannungen jeweils ähnlich oder gleich lange gemessen. Der Temperatursensor ist mit einer Ansteuerung verbunden, die einen Mikrocontroller aufweist und des Weiteren dazu ausgebildet ist, den Temperatursensor mit den mindestens zwei unterschiedlichen Messspannungen zu beaufschlagen. Dabei kann ein Temperatursensor direkt mit einem Eingang des Mikrocontrollers verbunden sein.

Der Mikrocontroller kann dabei die Differenz der unterschiedlichen Messspannungen bilden, wobei er einen internen Speicher aufweist. In diesem Speicher ist einerseits eine zu erwartenden Differenz-Soll-Kurve abgespeichert, mit welcher der Mikrocontroller die gemessene Differenz vergleicht, und andererseits sind Korrekturparameter abgespeichert, mit welchen der Mikrocontroller dann aus der Differenz der Messspannungen die tatsächliche Temperatur berechnet.

Durch dieses Beaufschlagen mit zwei unterschiedlichen Messspannungen wird erreicht, dass die so genannte Eigenerwärmung quasi besser bestimmt werden kann. Der Temperatursensor erfährt nämlich eine Eigenerwärmung durch eine angelegte Messspannung, welche sich zu der tatsächlichen Umgebungstemperatur addiert. Für eine genaue Temperaturmessung muss diese eigene Erwärmung abgezogen werden, was im Mikrocontroller erfolgt. Beim Betrieb mit zwei unterschiedlichen Messspannungen für den Widerstandssensor wird der tatsächlichen, zu messenden Temperatur eine Eigenerwärmungskurve überlagert, welche entsprechend den angelegten Messspannungen variiert. Die Amplitude der Eigenerwärmung steht neben dem Messstrom noch in Abhängigkeit zu der zu messenden Temperatur bzw. der Umgebung des Temperatursensors. Bei niedrigen zu messenden Temperaturen sind die Amplituden bzw. Ausschläge der Eigenerwärmungskurve größer und bei höheren Temperaturen entsprechend kleiner. Zwischen der tatsächlichen Temperaturkurve T bzw. der zu messenden Temperatur und den gemessenen Temperaturkurven T1 und T2 besteht eine funktionale Beziehung T = f(T1, T2) bzw. ΔT2 = f(ΔT1), deren Parameter im Speicher des Mikrocontrollers hinterlegt sind und T somit exakt berechnet werden kann. Des Weiteren kann aus der Differenz von Messspannungen U_{ref1} und U_{ref2}, wie sie nachfolgend noch erläutert werden, auf einen Erwartungswert der Differenztemperatur ΔT1 geschlossen werden. Die Erwartungswerte der Differenztemperaturkurve sind im Mikrocontroller hinterlegt. Wird nun die gemessene Temperaturkurve, also inklusive der Eigenerwärmung, entsprechend zurückgemessen, so kann daraus geschlossen werden, dass einerseits der Temperatursensor in seiner Umgebung und andererseits auch die damit verbundene Auswertung bzw. Schaltung korrekt arbeitet.

Eine Erwärmungskurve in der jeweils konkreten Einbau- und Betriebssituation des Temperatursensors kann beispielsweise in den Hauptzuständen Raumtemperatur und Maximaltemperatur für den Betrieb in einem sogenannten Master-Gerät ermittelt werden, also sozusagen als Referenz. Diese Erwärmungskurve wird dann im Speicher des Mikrocontrollers als Soll-Temperaturkurve hinterlegt, was einem Erwartungswert entspricht, und dient als Vergleichswert für eine nachfolgende Plausibilitätsprüfung mit der der tatsächlich gemessenen Temperaturkurve bei der Anwendung. Wird ein Vergleich dieses Erwartungswerts bzw. der Soll-Temperatur mit der gemessenen Temperaturkurve unplausibel bzw. ergeben sich zu große Abweichungen, so setzt der Mikrocontroller eine Sicherheitsfunktion in Kraft und eine Heizeinrichtung odgl. wird abgeschaltet, unter Umständen auch das gesamte elektrische Gerät. Eine solche Plausibilitätsprüfung wird vor allem dann durchgeführt, wenn nur noch kleinere Temperaturbewegungen erfasst werden, wenn also die zu messende Temperatur am Temperatursensor in etwa eingeschwungen ist.

In vorteilhafter Ausgestaltung der Erfindung kann eine redundante Auslegung vorgesehen sein, es sind also mindestens zwei Temperatursensoren mit je einem eigenen elektrischen Widerstand vorgesehen. Dies erhöht zum Einen die Ausfallsicherheit und zum Anderen können Vergleichsmessungen für höhere Sicherheit durchgeführt werden, wie im Folgenden noch ausgeführt wird. Vorteilhaft sind dabei die Temperatursensoren unterschiedlich bzw. nicht identisch. Eine erste Möglichkeit dafür ist es, Temperatursensoren unterschiedlicher Hersteller zu verwenden, selbst wenn diese an sich gleich oder zumindest prinzipgleich sind. Eine zweite Möglichkeit ist es, dass die Temperatursensoren bzw. deren elektrische Widerstände jeweils unterschiedliche Widerstandswerte aufweisen. Somit ergeben sich zwingend unterschiedliche Verläufe an jedem Temperatursensor bzw. nur die Spannungsverläufe sind unterschiedlich. Und so können systematische Fehler vermieden werden, falls beide als korrekt funktionierend scheinen. Nachteilig bei Verwendung zweier identischer Widerstandssensoren mit gleichen Werten, gleicher Herstelltechnologie und gleicher Produktionschargen ist, dass eine Temperaturverfälschung durch Alterung und/oder Drift nicht erkannt wird, da beide Sensoren sozusagen gleichartig "altern". Zur Vermeidung derartiger Probleme können bei der ersten Möglichkeit Widerstandssensoren aus unterschiedlichen Chargen bei Bezug vom gleichen Hersteller gewählt werden.

Gemäß einer nochmals weiteren Möglichkeit können die Temperatursensoren unterschiedliche Charakteristika aufweisen, insbesondere bezüglich einer Temperaturabhängigkeit des Widerstandswerts. Sie können deutlich unterschiedlich temperaturempfindlich sein, beispielsweise um mindestens den Faktor 2, 5 oder sogar 10. Alternativ ist mindestens einer der elektrischen Widerstände der beiden Temperatursensoren ein nicht-linearer und der andere ein linearer Widerstand, beispielsweise der eine ein NTC- oder PTC-Widerstand und der andere ein PT-Widerstand. Auch durch diese stark unterschiedliche Ausgestaltung können Fehler vermieden werden und eine Auswertegenauigkeit und Ausfallsicherheit erhöht werden. Bevorzugt werden ein NTC-Sensor und ein PT-Sensor verwendet, beispielsweise ein PT1000-Sensor.

Eine Möglichkeit ist es, bei dem Verfahren mit zwei Temperatursensoren einen davon mit der vorbeschriebenen wechselnden Messspannung zu beaufschlagen, und den anderen Temperatursensor nur mit einer einzigen konstanten Messspannung, also quasi zur exakten Temperaturerfassung. Eine Plausibilitätsprüfung kann dann im Mikrocontroller erfolgen, wenn die beiden Temperaturkurven verglichen werden und deren Differenz eine alternierende Erwärmungskurve ist.

In nochmals weiterer Ausgestaltung der Erfindung können unterschiedliche Vorwiderstände vor den Temperatursensoren bzw. deren Widerstände vorgesehen werden zur Erhöhung der Betriebssicherheit.

In nochmals weiterer Ausgestaltung der Erfindung kann ein Referenzwiderstand für einen Temperatursensor vorgesehen sein, der vorteilhaft auch ein elektrischer Widerstand ist. Er kann beispielsweise dem vorgenannten anderen Temperatursensor entsprechen, der nicht mit alternierender Messspannung betrieben wird. Alternativ kann ein solcher Referenzwiderstand als Vergleichswert für den Temperatursensor dienen. Dabei ist es zusätzlich auch noch möglich, dass mehrere unterschiedliche Referenzwiderstände vorgesehen sind und eine entsprechende Schalteinrichtung vorhanden ist, um zwischen den unterschiedlichen Referenzwiderständen umzuschalten. Dann kann an mehreren Widerständen die Temperatur gemessen werden bzw. eine Plausibilität für die an dem Temperatursensor gemessene Temperatur ermittelt werden.

In weiterer Ausgestaltung der Erfindung kann eine Schaltung der Einrichtung einen Integrationskondensator, einen elektrischen Widerstand als vorgenannten Temperatursensor, einen Referenzwiderstand bzw. vorgenannten Vorwiderstand und eine Zählschaltung für die Temperaturmessschaltung aufweisen. Dies wird nachfolgend noch näher erläutert.

In nochmals weiterer Ausgestaltung der Erfindung ist in der Ansteuerung für den Temperatursensor bzw. in einem Mikrocontroller ein Multiplexer vorhanden bzw. integriert. Dadurch können mehrere Temperatursensoren oder Messwiderstände ausgewertet werden. Beispielsweise ist dadurch auch eine Messbereichsumschaltung möglich.

Damit kann die Messeinrichtung bzw. das Gerät autark arbeiten, also ohne integrierte Temperaturregelung betrieben werden. Es fehlt dann eine Information über eine vorgegebene Heizleistung an dem Gerät bzw. der Erwartungswert.

Bei Geräten für industrielle Küchen und Restaurants wird für die Sicherheitselektronik eine Selbstdiagnose als DC (Diagnostic Coverage) verlangt. Bei einer Elektronik der Temperaturmesseinrichtung, die eine Sicherheitselektronik und einen Temperaturregler beinhaltet, also sozusagen zwei Kanäle aufweist, kann auf die Plausibilität des gemessenen Temperaturwertes über die eingespeiste Heizleistung durch den Temperaturregler rückgeschlossen werden. Wird die Sicherheitselektronik autark betrieben, also ohne Information aus dem Temperaturregler bzw. sozusagen nur mit einem Kanal, ist dieser Rückschluss nicht möglich. Deswegen soll ja vorliegend die Diagnose des Temperatursensors mittels der zwei Messspannungen durchgeführt werden. Im Vordergrund steht also nicht so sehr der Vorteil, dass eine einfachere Messschaltung aufgebaut werden kann, sondern die Realisierung der Selbstdiagnose bei einer autark betriebenen Sicherheitselektronik, also ohne Information aus dem Temperaturregler.

Vorteilhaft ist ein Speicher vorgesehen, beispielsweise in der Ansteuerung bzw. vorteilhaft dem Mikrocontroller, in dem mindestens eine zu erwartende Soll-Temperaturkurve für den Temperatursensor abgespeichert ist, die im Betrieb des elektrischen Gerätes gelten soll. Dabei ist die Temperaturmesseinrichtung bzw. der Mikrocontroller dazu ausgebildet, die mit dem Temperatursensor gemessene Ist-Temperaturkurve mit der abgespeicherten Soll-Temperaturkurve zu vergleichen. Dadurch kann eben die vorliegende Temperatur bestimmt werden und insbesondere kann der Fall einer zu hohen Temperatur erkannt werden, woraufhin das Gerät ausgeschaltet werden sollte.

Vorteilhaft ist ein solches Gerät, wie eingangs genannt, mit einer elektrischen Heizeinrichtung versehen, welche in einen Heizraum wirken kann, welcher beispielsweise eine Ofenmuffel eines Backofens sein kann oder ein Ölbecken einer eingangs genannten Fritteuse. In dem Heizraum kann sich ein zu erhitzendes Medium befinden, wie beispielsweise Frittierfett bei der Fritteuse.

In nochmals weiterer Ausgestaltung der Erfindung kann aufgrund des vorgenannten Umstandes, dass die Amplitude der Eigenerwärmung größer oder kleiner ist abhängig von der zu messenden Temperatur, auf die absolute Temperatur rückgeschlossen werden. Dazu wird diese Amplitude berechnet und anhand von Vergleichswerten, die vorteilhaft im Mikrocontroller bzw. der Ansteuerung abgespeichert sind, wird die absolute Temperatur ermittelt. Dies kann auch als Überprüfung der gemessenen Temperaturwerte verwendet werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: ein Schaltungskonzept für die Temperaturmesseinrichtung gemäß einer ersten Ausgestaltung der Erfindung,
- Fig. 2a-c: Verläufe der Temperatur über der Zeit bei einem Aufheizvorgang in verschiedenen Darstellungen,
- Fig. 3: eine Ausführungsform des Schaltungskonzepts von Fig. 1,
- Fig. 4: Verläufe der Spannung über der Zeit am Temperatursensor gegen Masse bei zwei Messspannungen,
- Fig. 5: eine alternative Ausführungsform eines Schaltungskonzepts mit zwei Temperatursensoren und einem Multiplexer zum Mikrocontroller hin in einer Anordnung ähnlich Fig. 1,
- Fig. 6: eine Ausführungsform des Schaltungskonzepts aus Fig. 5,
- Fig. 7: die Darstellung der Spannung der Temperatursensoren gegen Masse in Abhängigkeit von der Zeit,
- Fig. 8: eine nochmals weitere alternative Ausgestaltung eines Schaltungskonzepts mit in den Mikrocontrollern integriertem Multiplexer,
- Fig. 9: der Verlauf der Eingangsspannung vom Mikrocontroller über der Zeit bei dem Schaltungskonzept gemäß Fig. 8 und
- Fig. 10: eine Fritteuse als erfindungsgemäßes elektrisches Gerät mit einer Heizeinrichtung und einem Temperatursensor zu deren Überwachung samt Temperaturmesseinrichtung entsprechend Fig. 1.

### Detaillierte Beschreibung der Ausführungsbeispiele

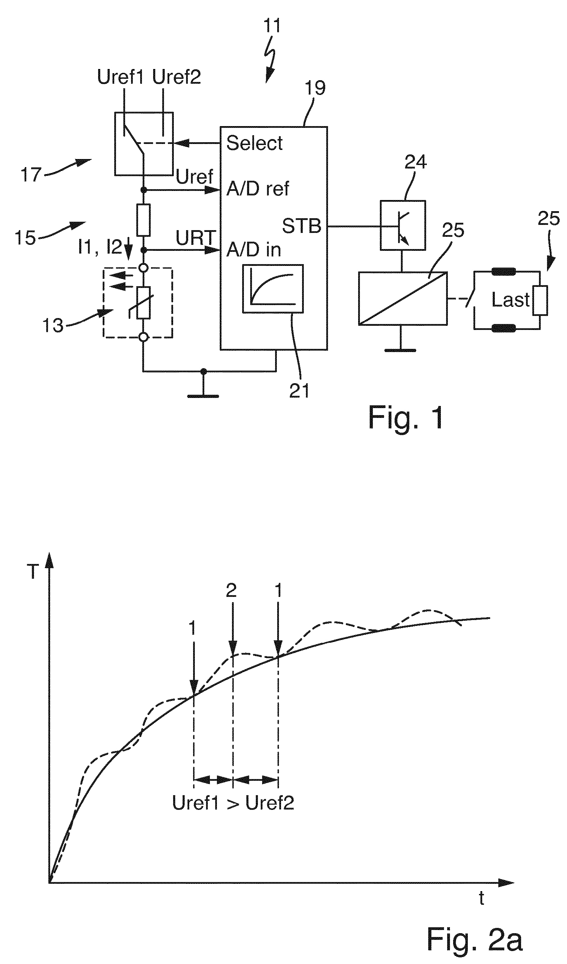

In der Fig. 1 ist ein grundsätzliches Schaltungskonzept gemäß der Erfindung für eine Temperaturmesseinrichtung 11 in einer ersten grundsätzlichen Ausgestaltung der Erfindung dargestellt. Die Temperaturmesseinrichtung 11 weist einen Temperatursensor 13 auf, im vorliegenden Fall einen temperaturabhängigen Widerstand, der den gestrichelt dargestellten Temperaturfühler bilden kann. Vor den Temperatursensor 13 ist ein Vorwiderstand 15 geschaltet, und davor wiederum ein Schalter 17, der über einen Select-Ausgang eines Mikrocontrollers 19 gesteuert wird. Der Schalter 17 schaltet zwischen zwei Messspannungen U_{ref1} und U_{ref2} um. Die jeweilige Messspannung wird vor dem Vorwiderstand 15 an einen der Eingänge des Mikrocontrollers 19 gegeben, ebenso die Spannung über dem Temperatursensor 13. U_{RT} ist die temperaturabhängige Spannung, die sich aus dem Teilerverhältnis des Vorwiderstands 15 und dem Widerstandswert des Temperatursensors 13 ergibt. Die Spannung U_{ref} ist gleichzeitig die Betriebsspannung des Spannungsteilers 15 und 13, durch welche der Strom I₁ und I₂ vorgegeben wird. Die Eigenerwärmung des Temperatursensors 13 ist abhängig von der Größe des Stroms I₁ bzw. I₂, welcher durch die Umschaltung von U_{ref1} und U_{ref2} über den Ausgang Select und den Schalter 17 vorgeben wird. Bei Umschalten des Schalters 17 bleibt das Spannungsverhältnis U_{ref} zu U_{RT} gleich, und somit auch das Messergebnis von U_{RT1} des A/D-Wandlers im Mikrocontroller 19.

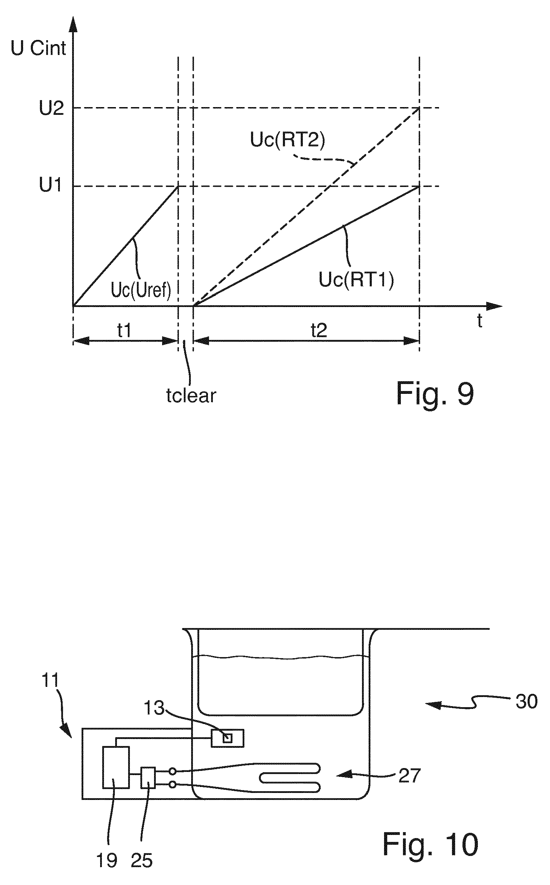

In dem Mikrocontroller 19 ist unter anderem ein Speicher 21 vorhanden, in dem bestimmte zu erwartende bzw. Soll-Temperaturkurven abgespeichert sind für den Temperatursensor 13 bzw. die Temperaturmesseinrichtung 11. Ein Ausgang STB des Mikrocontrollers 19 geht an einen Transistor 24 als Schalter, der wiederum ein Relais 25 zum Schalten von Lasten ansteuert. Damit wird eine Heizeinrichtung 27 angesteuert bzw. eingeschaltet oder ausgeschaltet, die hier als Heizwiderstand dargestellt ist, wozu im Hinblick auf die Fig. 10 noch mehr ausgeführt wird.

In der Fig. 10 ist eine Fritteuse 30 als beispielhaftes elektrisches Gerät dargestellt, welches die Temperaturmesseinrichtung 11 aufweist. Im Inneren der Fritteuse 30 befindet sich die Heizeinrichtung 27, hier beispielhaft dargestellt als für solche Fälle üblicher Rohrheizkörper. Er ist entsprechend der Fig. 1 mittels des Relais 25 ansteuerbar, welches wiederum vom Mikrocontroller 19 gesteuert wird.

Des Weiteren ist ein Temperaturfühler bzw. Temperatursensor 13 der Temperaturmesseinrichtung 11 in der Fritteuse 30 angeordnet. Dieser Temperatursensor 13 erfasst die Temperatur in der Fritteuse 30 bzw. des darin befindlichen Frittierfetts um ein Überhitzen durch die Heizeinrichtung 27 zu vermeiden.

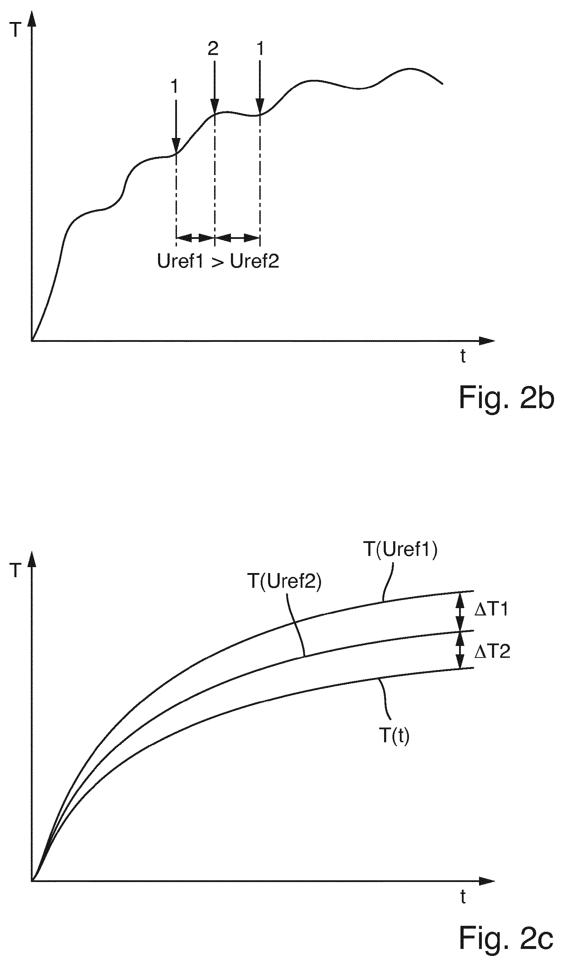

In der Fig. 2a ist der Verlauf der Temperatur T über der Zeit t dargestellt. Gerade durchgezogen verläuft die tatsächliche Temperaturkurve am Ort des Temperatursensors 13, wenn dieser nicht betrieben würde. Gestrichelt dargestellt ist die Temperatur im Temperatursensor 13, die den eingangs beschriebenen welligen Verlauf aufweist mit den unterschiedlichen Amplituden aufgrund der unterschiedlichen Messspannungen. Diese wellige Kurve ist in der Fig. 2b alleine und durchgezogen dargestellt. Zum Messzeitpunkt 1 wird mit der ersten Messspannung U_{ref1} eine Temperaturmessung am Temperatursensor 13 durchgeführt, indem der Schalter 17 vom Mikrocontroller 19 gesteuert diese Messspannung U_{ref1} über den Vorwiderstand 15 an den Temperatursensor 13 anlegt. Dann wird zum Messzeitpunkt 2 der Schalter 17 umgelegt und die Messspannung U_{ref2} wird an den Temperatursensor 13 angelegt. Da die Messspannung U_{ref1} größer ist als die Messspannung U_{ref2}, ist die Erhöhung der Temperatur im Temperatursensor 13 zwischen Messzeitpunkt 1 und Messzeitpunkt 2 etwas stärker.

Dann wird ab dem Messzeitpunkt 2 mit der zweiten Messspannung U_{ref2} der Verlauf der Temperatur bis zum erneuten Messzeitpunkt 1 erfasst. Da die zweite Messspannung U_{ref2} nun kleiner ist, fällt die Temperatur vom Messzeitpunkt 2 zum Messzeitpunkt 1 hin wieder etwas ab. Somit kann also zum Messzeitpunkt 1 jeweils die tatsächliche Temperatur gemessen werden, unter Umständen mit einem eingangs genannten Korrekturwert. Zum Messzeitpunkt 2 wird eine Kontrollmessung vorgenommen. Hier muss die Temperatur höher sein als zum Messzeitpunkt 1 davor und danach, also wenn dann wiederum mit der etwas geringeren Messspannung U_{ref2} gemessen wird. Dies ist die Eingangs genannte Plausibilitätsprüfung in der Temperaturmesseinrichtung 11.

Die Fig. 2c zeigt die Verläufe der Temperaturen, wobei die unterste diejenige aus der Fig. 2a ist. Die mittlere Temperaturkurve ist diejenige bei U_{ref2}, und die oberste ist diejenige bei U_{ref1}. Die Temperaturdifferenz zwischen den beiden oberen Kurven ist ΔT1, und die zwischen den unteren ist ΔT2, siehe hierzu auch die eingangs gemachten Bemerkungen.

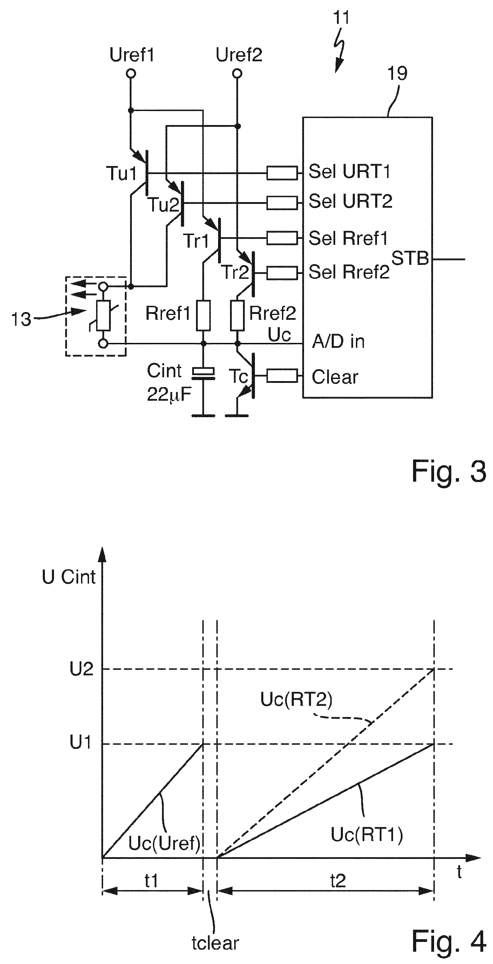

Die Fig. 3 zeigt die praktische Ausführung des Schaltungskonzepts der Fig. 1. Der Schalter 17 ist hier durch die Transistoren Tᵤ₁ und Tᵤ₂ sowie Tᵣ₁ und Tᵣ₂ ersetzt. Diese vier Transistoren werden jeweils durch entsprechende Ausgänge des Mikrocontrollers 19 geschaltet. Die Transistoren Tᵣ₁ und Tᵣ₂ steuern über Widerstände R_{ref1} und R_{ref2} die jeweilige Messspannung an dem Eingang des Mikrocontrollers 19. Des Weiteren ist noch ein Kondensator Cᵢₙₜ für die Wandlungszeiten vorgesehen sowie ein Transistor T_{c}. Über den Entladeschalter T_{c} wird für eine Zeit t_{clear} der Integrations-Kondensator Cᵢₙₜ entladen. Dann wird U_{ref1} über Tᵣ₁ durchgeschaltet und Cᵢₙₜ wird über den Referenzwiderstand Rref1 bis zu einer definierten Spannungsschwelle U_{c}(R_{ref1}) = U₁ geladen. Die Ladezeit t1 wird im Mikrocontroller 19 gespeichert.

Nach dem Löschen wird U_{ref1} über Tᵤ₁ durchgeschaltet und Cᵢₙₜ wird über den Temperatursensor 13 geladen, bis die Spannungsschwelle U_{c}(R_{RT}) = U₁ erreicht ist. Die Ladezeit t2 wird ebenfalls im Mikrocontroller 19 gespeichert. Der temperaturabhängige Widerstand des Temperatursensors 13 kann nun im Mikrocontroller 19 berechnet werden aus dem Verhältnis R_{ref1} * t2/t1. In gleicher Weise wird verfahren mit dem Zweig U_{ref2} und R_{ref2}, also mit der zweiten Messspannung.

In Fig. 4 ist im Schaubild der Verlauf der Spannung am Eingang des Mikrocontrollers 19 dargestellt, und zwar sowohl für die beiden Spannungen U₁ und U₂ als auch während der jeweiligen Messzeiten t₁ und t₂.

Für eine konstante Spannung am Eingang des Mikrocontrollers 19 gilt, dass sich der Widerstandswert des Temperatursensors 13 verhält wie der Widerstandswert des jeweiligen Referenzwiderstandes R_{ref1} oder R_{ref2} multipliziert mit dem Verhältnis der Messzeit t₂ zur Messzeit t₁. Wird der Kondensator Cᵢₙₜ zu 22 µF gewählt und wird ein PT1000 als Temperatursensor 13 verwendet, so ergibt sich bei 400°C eine Schaltschwelle von 54 ms.

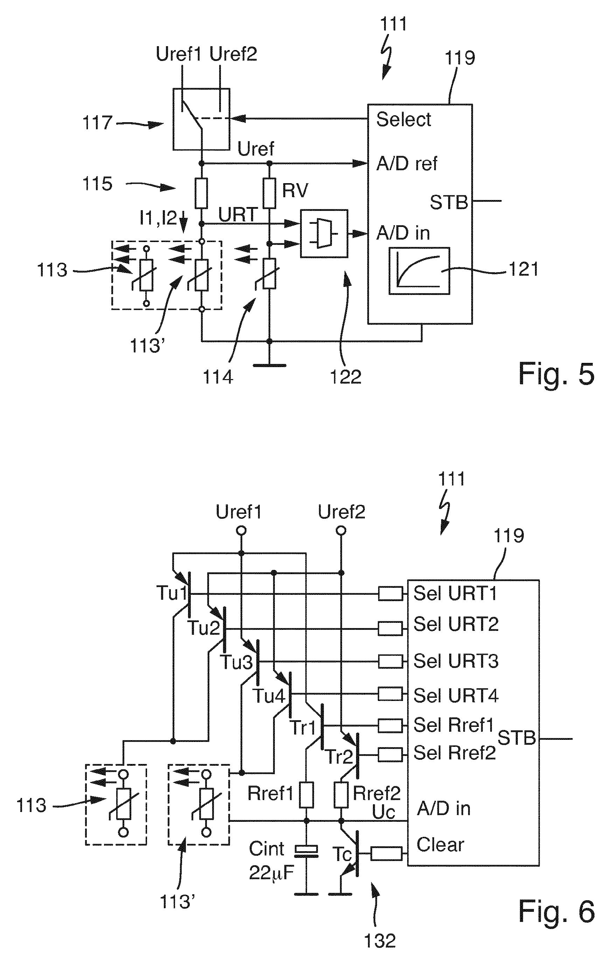

Das alternative grundsätzliche Schaltungskonzept der Fig. 5 weist bei der dortigen Temperaturmesseinrichtung 111 einen ersten Temperatursensor 113 und einen zweiten Temperatursensor 113' auf. Diese beiden Temperatursensoren können in einem einzigen gestrichelt dargestellten Temperaturfühler zusammengefasst sein und, gemäß Fig. 10, in der Fritteuse angeordnet sein, vorteilhaft auch in räumlicher Nähe zueinander, um die gleiche Temperatur zu messen.

Entsprechend Fig. 1 sind ein Vorwiderstand 115 und ein Schalter 117 für zwei Messspannungen U_{ref1} und R_{ref2} vorgesehen. Geschaltet wird der Schalter 117 wiederum vom Mikrocontroller 119, der auch einen Speicher 121 enthält. Rechts an den Ausgang STB des Mikrocontrollers 119 schließt sich entsprechend Fig. 1 eine schaltbare Heizeinrichtung an, die hier aber der Übersichtlichkeit halber nicht dargestellt worden ist.

Die Temperaturmesseinrichtung 111 weist noch einen weiteren Raumtemperatursensor 114 auf, der ebenfalls einen temperaturabhängigen Widerstandswert aufweist. Er dient zur Gegenkontrolle der Werte des Temperatursensors 113 durch Bestimmung der Raumtemperatur. Die Spannungen über den Temperatursensoren 113 und 114 werden über einen Multiplexer 122 an den entsprechenden Eingang des Mikrocontrollers 119 gegeben.

Die beiden Temperatursensoren 113 und 113' bilden ein Sensorpaar, welches zunächst elektrisch nicht verbunden gemeinsam im Temperaturfühler angeordnet ist. Jede Temperaturmessung muss separat erfasst werden. Der Raumtemperatursensor 114 dient als Referenzwiderstandssensor, über den eine Kalibrierung und eine Funktionskontrolle der Temperatursensoren 113 und 113' durchgeführt werden. Dazu kann er einem gleichen Bauteilträger wie die anderen Schaltungsbauteile angeordnet sein, beispielsweise wie der Mikrocontroller 119. Der Multiplexer 122 dient zur Umschaltung der einzelnen Sensoren 113, 113' und 114 und kann auch Teil des Mikrocontrollers 119 sein.

In Fig. 6 ist in Entsprechung zu Fig. 3 die praktische Ausführung des Schaltungskonzepts der Temperaturmesseinrichtung 111 dargestellt. Hier sind in Entsprechung zu Fig. 3 noch zwei weitere Transistoren Tᵤ₃ und Tᵤ₄ für den zweiten Temperatursensor 113' vorgesehen. Für den Temperatursensoren 113' ist lediglich noch je ein zusätzlicher Transistorzweig mit den Transistoren Tᵤ₃ und Tᵤ₄ erforderlich.

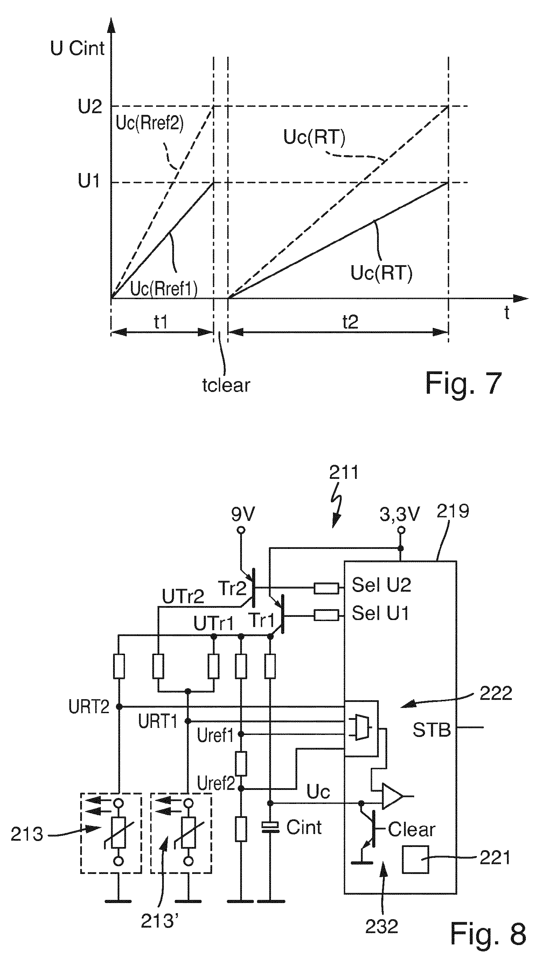

In Fig. 7 ist der entsprechende zeitliche Verlauf der Spannung am Eingang des Mikrocontrollers 119 während der beiden Messzeiten t1 und t₂ entsprechend der Fig. 4 dargestellt.

In der nochmals weiteren alternativen Ausgestaltung gemäß Fig. 8 für eine Temperaturmesseinrichtung 211 sind, ähnlich wie bei Fig. 6, zwei Temperatursensoren 213 und 213' vorgesehen. Sie werden über Transistoren Tᵣ₁ und Tᵣ₂ mit Messspannungen versorgt und zwar 9 V und 3,3 V. Im Mikrocontroller 219 ist neben einem Speicher 221 ein Multiplexer 222 integriert sowie ein weiterer Transistor 232 samt internem OP-Verstärker. Eine angeschlossene Heizeinrichtung samt Schaltern entsprechend Fig. 1 ist wiederum nicht dargestellt. Sowohl der Multiplexer 222 zur Umschaltung der Sensorspannungen U_{ref1} und U_{ref2} als auch der Entladeschalter 232 können im Mikrocontroller 219 integriert sein.

In Fig. 9 ist auch hierfür der Verlauf der Eingangsspannung am Mikrocontroller 219 dargestellt, und zwar beide Spannungen U₂ und U₁ für die beiden Messzeiten t1 und t2.

Die beiden Temperatursensoren der Fig. 5/6 einerseits und 8 andererseits können nach den eingangs genannten Kriterien ausgewählt werden, sollten also unterschiedlich sein auf verschiedene Art. Des Weiteren ist zu sehen, dass im Mikrocontroller jeweils nur eine Ansteuerung für die Heizeinrichtung angeschlossen ist, siehe hierzu vor allem die Fig. 1.

Die zyklische Umschaltung gemäß Fig. 2 zwischen den Messspannungen U_{ref1} und U_{ref2} erfolgt zwar vorteilhaft immer wieder mit gleichem zeitlichem Abstand, nämlich zu den Messzeitpunkten 1 und 2. Grundsätzlich kann dies jedoch auch variabel sein.

## Patentansprüche

1. Verfahren zur Temperaturmessung mit einer Temperaturmesseinrichtung (11, 111, 211) für ein elektrisches Gerät, mit mindestens einem Temperatursensor (13, 113, 113', 213, 213') in Form eines elektrischen Widerstands, der mit mindestens zwei unterschiedlichen Messspannungen (U_{ref1}, U_{ref2}) beaufschlagbar ist bei zyklischer Umschaltung zwischen den Messspannungen, wobei der Temperatursensor mit einer Ansteuerung verbunden ist, die einen Mikrocontroller (19, 119, 219) aufweist und zur Beaufschlagung des Temperatursensors mit mindestens zwei unterschiedlichen Messspannungen ausgebildet ist, wobei:
- die Ansteuerung den Temperatursensor (13, 113, 113', 213, 213') mit den mindestens zwei unterschiedlichen Messspannungen (U_{ref1}, U_{ref2}) beaufschlagt,
- der Temperatursensor eine Eigenerwärmung erfährt durch die angelegten Messspannungen (U_{ref1}, U_{ref2}), welche sich zu der tatsächlichen Umgebungstemperatur addieren,
**dadurch gekennzeichnet, dass**
- der Temperatursensor (13, 113, 113', 213, 213') mit den mindestens zwei unterschiedlichen Messspannungen (U_{ref1}, U_{ref2}) beaufschlagt wird bei zyklischer Umschaltung zwischen den Messspannungen,
- beim Betrieb mit den mindestens zwei unterschiedlichen Messspannungen (U_{ref1}, U_{ref2}) für den Widerstandssensor der tatsächlichen, zu messenden Temperatur eine Eigenerwärmungskurve überlagert wird, welche entsprechend den angelegten Messspannungen variiert,
- die Amplitude der Eigenerwärmung neben dem Messstrom noch in Abhängigkeit zu der zu messenden Temperatur bzw. der Umgebung des Temperatursensors (13, 113, 113', 213, 213') steht,
- bei niedrigen zu messenden Temperaturen die Amplituden bzw. Ausschläge der Eigenerwärmungskurve größer sind und bei höheren Temperaturen entsprechend kleiner sind,
- zwischen einer tatsächlichen Temperaturkurve bzw. der zu messenden Temperatur und den gemessenen Temperaturkurven (T) eine funktionale Beziehung besteht, deren Parameter im Speicher des Mikrocontrollers (19, 119, 219) hinterlegt sind,
- für eine genaue Temperaturmessung die Eigenerwärmung abgezogen wird, was im Mikrocontroller (19, 119, 219) erfolgt, und die Temperatur somit exakt berechnet wird.

2. Verfahren nach Anspruch 1, **dadurch gekennzeichnet, dass** der Temperatursensor (13, 113, 113', 213, 213') mit zwei unterschiedlichen Vorwiderständen (15, 115) betrieben wird.

3. Verfahren nach Anspruch 1 oder 2, **dadurch gekennzeichnet, dass** die Temperaturmessung mit dem mindestens einen Temperatursensor (13, 113, 113', 213, 213') sowie mit mindestens einem Referenzwiderstand (R_{ref1}, R_{ref2}) durchgeführt wird, wobei der Referenzwiderstand als Vergleichswert zu dem elektrischen Widerstand des Temperatursensors verwendet wird und dabei der Temperatursensor (13, 113, 113', 213, 213') oder der Referenzwiderstand (R_{ref1}, R_{ref2}) mit zyklischer Umschaltung zwischen den Messspannungen (U_{ref1}, U_{ref2}) betrieben wird und der andere mit konstanter Messspannung zur direkten Temperaturmessung, wobei vorzugsweise im Mikrocontroller (19, 119, 219) ein Vergleich der beiden gemessenen Ist-Temperaturkurven erfolgt.

4. Verfahren nach einem der vorhergehenden Ansprüche, **dadurch gekennzeichnet, dass** eine am Temperatursensor (13, 113, 113', 213, 213') gemessene Ist-Temperaturkurve mit einer in der Ansteuerung bzw. in dem Mikrocontroller (19, 119, 219) hinterlegten Soll-Temperaturkurve als Überlagerung verglichen wird, wobei vorzugsweise eine Amplitude der Überlagerung ausgewertet wird zum Rückschließen auf die absolute Temperatur.

5. Temperaturmesseinrichtung (11, 111, 211) für ein elektrisches Gerät (30), mit mindestens einem Temperatursensor (13, 113, 113', 213, 213') in Form eines elektrischen Widerstands, der mit mindestens zwei unterschiedlichen Messspannungen (U_{ref1}, U_{ref2}) beaufschlagbar ist bei zyklischer Umschaltung zwischen den Messspannungen, wobei der Temperatursensor mit einer Ansteuerung verbunden ist, die einen Mikrocontroller (19, 119, 219) aufweist und zur Beaufschlagung des Temperatursensors mit mindestens zwei unterschiedlichen Messspannungen (U_{ref1}, U_{ref2}) nach einem Verfahren nach einem der vorhergehenden Ansprüche ausgebildet ist.

6. Einrichtung nach Anspruch 5, **dadurch gekennzeichnet, dass** mindestens zwei Temperatursensoren (13, 113, 113', 213, 213') mit je einem elektrischen Widerstand vorgesehen sind, wobei vorzugsweise die Temperatursensoren unterschiedlich bzw. nicht identisch sind und/oder wobei Temperatursensoren unterschiedlicher Hersteller vorgesehen sind.

7. Einrichtung nach Anspruch 6, **dadurch gekennzeichnet, dass** die Temperatursensoren (13, 113, 113', 213, 213') bzw. deren elektrische Widerstände jeweils unterschiedliche Widerstandswerte aufweisen.

8. Einrichtung nach Anspruch 6 oder 7, **dadurch gekennzeichnet, dass** die Temperatursensoren (13, 113, 113', 213, 213') unterschiedliche Charakteristika aufweisen, vorzugsweise bezüglich der Temperaturabhängigkeit des Widerstandswerts, insbesondere ein nicht-linearer Widerstand und ein linearer Widerstand, wobei vorzugsweise einer der elektrischen Widerstände der beiden Temperatursensoren ein NTC- oder PTC-Widerstand als nicht-linearer Widerstand ist.

9. Einrichtung nach einem der Ansprüche 5 bis 8, **gekennzeichnet durch** mindestens zwei unterschiedliche Vorwiderstände (15, 115) vor dem oder den Temperatursensoren (13, 113, 113', 213, 213').

10. Einrichtung nach einem der Ansprüche 5 bis 9, **dadurch gekennzeichnet, dass** ein Referenzwiderstand (R_{ref1}, R_{ref2}) für einen Temperatursensor (13, 113, 113', 213, 213') vorgesehen ist, insbesondere als elektrischer Widerstand, als Vergleichswert für den Temperatursensor, wobei vorzugsweise mehrere unterschiedliche Referenzwiderstände (R_{ref1}, R_{ref2}) vorgesehen sind und eine Schalteinrichtung (Tr1, Tr2) zum Umschalten zwischen den Referenzwiderständen vorgesehen ist.

11. Einrichtung nach einem der Ansprüche 5 bis 10, **gekennzeichnet durch** einen Integrationskondensator (Cᵢₙₜ), einen elektrischen Widerstand als Temperatursensor (13, 113, 113', 213, 213'), einen Referenzwiderstand (R_{ref1}, R_{ref2}) und eine Zählschaltung für eine Schaltung der Temperaturmesseinrichtung (11, 111, 211).

12. Einrichtung nach einem der Ansprüche 5 bis 11, **gekennzeichnet durch** einen integrierten Multiplexer (122) in der Ansteuerung bzw. im Mikrocontroller (119).

13. Einrichtung nach einem der Ansprüche 5 bis 12, **dadurch gekennzeichnet, dass** die Ansteuerung bzw. der Mikrocontroller (19, 119, 219) einen Speicher (21, 121, 221) aufweist, in dem mindestens eine zu erwartende Soll-Temperaturkurve für den Temperatursensor (13, 113, 113', 213, 213') im Betrieb des elektrischen Gerätes (30) abgespeichert ist, wobei die Einrichtung (11, 111, 211) bzw. der Mikrocontroller (19, 119, 219) dazu ausgebildet ist, die am Temperatursensor (13, 113, 113', 213, 213') gemessene Ist-Temperaturkurve mit der in der Ansteuerung bzw. in dem Mikrocontroller (19, 119, 219) abgespeicherten Soll-Temperaturkurve zu vergleichen.

14. Elektrisches Gerät (30) mit einer Temperaturmesseinrichtung (11, 11, 211) nach einem der Ansprüche 5 bis 13, **dadurch gekennzeichnet, dass** es eine elektrische Heizung (27) aufweist für einen Heizraum, wobei die Temperatur in dem Heizraum, ggf. zusammen mit einem Medium wie einem Fluid in dem Heizraum, mit dem Temperatursensor (13, 113, 113', 213, 213') gemessen bzw. überwacht wird.

## Claims

1. A method for measuring temperature using a temperature measuring device (11, 111, 211) for an electric appliance, including at least one temperature sensor (13, 113, 113', 213, 213') in the form of an electric resistor, to which at least two different measuring voltages (U_{ref1}, U_{ref2}) can be applied with cyclic switching between the measuring voltages, wherein the temperature sensor is connected to a control, which comprises a microcontroller (19, 119, 219) and which is configured for applying at least two different measuring voltages to the temperature sensor, wherein:
- the control applies the at least two different measuring voltages (U_{ref1}, U_{ref2}) to the temperature sensor (13, 113, 113', 213, 213'),
- the temperature sensor is subject to inherent heating by the applied measuring voltages (U_{ref1}, U_{ref2}), which add to the actual environmental temperature, **characterized in that**
- the at least two different measuring voltages (U_{ref1}, U_{ref2}) are applied to the temperature sensor (13, 113, 113', 213, 213') with cyclic switching between the measuring voltages,
- during operation with the at least two different measuring voltages (U_{ref1}, U_{ref2}) for the resistance sensor there is superposition of an inherent heating curve, which varies according to the measuring voltages applied, to the actual temperature to be measured,
- the amplitude of the inherent heating is dependent on the measuring current and also on the temperature to be measured and on the environment of the temperature sensor (13, 113, 113', 213, 213'), respectively,
- with low temperatures to be measured the amplitudes or peaks of the inherent heating curve are greater, and with higher temperatures are correspondingly smaller,
- between an actual temperature curve or the temperature to be measured and the measured temperature curves (T) there is a functional interrelation, with parameters thereof saved in a memory of the microcontroller (19, 119, 219),
- for an exact temperature measurement the inherent heating is subtracted, which is done in the microcontroller (19, 119, 219) and, thus, the temperature is calculated exactly.

2. The method according to claim 1, **characterized in that** the temperature sensor (13, 113, 113', 213, 213') is operated with two different series resistors (15, 115).

3. The method according to claim 1 or 2, **characterized in that** the temperature measurement is conducted with the at least one temperature sensor (13, 113, 113', 213, 213') as well as with at least one reference resistor (R_{ref1}, R_{ref2}), wherein the reference resistor is used as comparative value to the electric resistor of the temperature sensor and in this case the temperature sensor (13, 113, 113', 213, 213') or the reference resistor (R_{ref1}, R_{ref2}) is operated with cyclic switching between the measuring voltages (U_{ref1}, U_{ref2}), and the other one is operated with a constant measuring voltage for direct temperature measuring, wherein preferably a comparison of the two measured actual temperature curves is effected in the microcontroller (19, 119, 219).

4. The method according to any one of the preceding claims, **characterized in that** an actual temperature curve measured at the temperature sensor (13, 113, 113', 213, 213') is compared to a desired temperature curve saved in the control or in the microcontroller (19, 119, 219) as superposition, wherein preferably an amplitude of the superposition is evaluated in order to deduce the absolute temperature.

5. A temperature measuring device (11, 111, 211) for an electric appliance (30) including at least one temperature sensor (13, 113, 113', 213, 213') in the form of an electric resistor, to which at least two different measuring voltages (U_{ref1}, U_{ref2}) can be applied with cyclic switching between the measuring voltages, wherein the temperature sensor is connected to a control, which comprises a microcontroller (19, 119, 219) and which is configured for applying at least two different measuring voltages (U_{ref1}, U_{ref2}) to the temperature sensor according to a method according to any one of the preceding claims.

6. The device according to claim 5, **characterized in that** at least two temperature sensors (13, 113, 113', 213, 213') each with an electric resistor are provided, wherein preferably the temperature sensors are different or non-identical and/or wherein temperature sensors of different manufacturers are provided.

7. The device according to claim 6, **characterized in that** the temperature sensors (13, 113, 113', 213, 213') or the electric resistors thereof in each case have different resistance values.

8. The device according to claim 6 or 7, **characterized in that** the temperature sensors (13, 113, 113', 213, 213') have different characteristics, preferably in terms of the temperature dependence of the resistance value, in particular a non-linear resistor and a linear resistor are provided, wherein preferably one of the electric resistors of the two temperature sensors is a NTC or PTC resistor as non-linear resistor.

9. The device according to any of claims 5 to 8, **characterized by** at least two different series resistors (15, 115) upstream of the one or more temperature sensor(s) (13, 113, 113', 213, 213').

10. The device according to any of claims 5 to 9, **characterized in that** a reference resistor (R_{ref1}, R_{ref2}) is provided for a temperature sensor (13, 113, 113', 213, 213'), in particular an electric resistor, being a comparative value for the temperature sensor, wherein preferably a plurality of different reference resistors (R_{ref1}, R_{ref2}) are provided and a switching device (Tr1, Tr2) for switching over between the reference resistors is provided.

11. The device according to any of claims 5 to 10, **characterized by** an integration capacitor (Cᵢₙₜ), an electric resistor as temperature sensor (13, 113, 113', 213, 213'), a reference resistor (R_{ref1}, R_{ref2}) and a counting circuit for a circuit of the temperature measuring device (11, 111, 211).

12. The device according to any of claims 5 to 11, **characterized by** an integrated multiplexer (122) in the control or in the microcontroller (119).

13. The device according to any of claims 5 to 12, **characterized in that** the control or the microcontroller (19, 119, 219) comprises a memory (21, 121, 221) in which at least one desired temperature curve to be expected for the temperature sensor (13, 113, 113', 213, 213') during the operation of the electric appliance (30) is stored, wherein the device (11, 111, 211) or the microcontroller (19, 119, 219) is configured for comparing the actual temperature curve measured at the temperature sensor (13, 113, 113', 213, 213') to the desired temperature curve stored in the control or in the microcontroller (19, 119, 219).

14. An electric appliance (30) having a temperature measuring device (11, 111, 211) according to any of claims 5 to 13, **characterized in that** it comprises an electric heating (27) for a space to be heated, wherein the temperature in the space to be heated, as required together with a medium such as a fluid in the space to be heated, is measured or monitored by means of the temperature sensor (13, 113, 113', 213, 213').

## Revendications

1. Procédé de mesure de température avec un dispositif de mesure de température (11, 111, 211) pour un appareil électrique, comprenant au moins une sonde de température (13, 113, 113', 213, 213') sous la forme d'une résistance électrique qui est alimentée par au moins deux tensions de mesure (U_{ref1}, U_{ref2}) différentes lors d'une permutation cyclique entre les tensions de mesure, la sonde de température étant reliée à une commande qui possède un microcontrôleur (19, 119, 219) et qui est configurée pour alimenter la sonde de température avec au moins deux tensions de mesure différentes, procédé selon lequel :
- la commande alimente la sonde de température (13, 113, 113', 213, 213') avec les au moins deux tensions de mesure (U_{ref1}, U_{ref2}) différentes,
- la sonde de température subit un échauffement propre du fait des tensions de mesure (U_{ref1}, U_{ref2}) appliquées, lesquelles s'ajoutent à la température ambiante effective,
**caractérisé en ce que**
- la sonde de température (13, 113, 113', 213, 213') est alimentée avec les au moins deux tensions de mesure (U_{ref1}, U_{ref2}) différentes lors de la permutation cyclique entre les tensions de mesure,
- lors du fonctionnement avec les au moins deux tensions de mesure (U_{ref1}, U_{ref2}) différentes pour la sonde résistive, une courbe d'échauffement propre qui varie en fonction des tensions de mesure appliquées est superposée à la température effective à mesurer,
- l'amplitude de l'échauffement propre, outre le courant de mesure, dépend également de la température à mesurer ou de l'environnement de la sonde de température (13, 113, 113', 213, 213'),
- en présence de températures à mesurer plus basses, les amplitudes ou les déviations de la courbe d'échauffement propre sont plus élevées, et plus faibles en conséquence en présence de températures plus élevées,
- entre une courbe de température effective ou la température à mesurer et les courbes de température mesurées (T), il existe une relation fonctionnelle dont les paramètres sont stockés dans la mémoire du microcontrôleur (19, 119, 219),
- l'échauffement propre est soustrait pour une mesure précise de la température, opération qui est réalisée dans le microcontrôleur (19, 119, 219), et la température est ainsi calculée avec précision.

2. Procédé selon la revendication 1, **caractérisé en ce que** la sonde de température (13, 113, 113', 213, 213') fonctionne avec deux résistances série (15, 115) différentes.

3. Procédé selon la revendication 1 ou 2, **caractérisé en ce que** la mesure de température est effectuée avec l'au moins une sonde de température (13, 113, 113', 213, 213') ainsi qu'avec au moins une résistance de référence (R_{ref1}, R_{ref2}), la résistance de référence étant utilisée comme valeur comparative par rapport à la résistance électrique de la sonde de température et la sonde de température (13, 113, 113', 213, 213') ou la résistance de référence (R_{ref1}, R_{ref2}) fonctionnant ici avec une permutation cyclique entre les tensions de mesure (U_{ref1}, U_{ref2}) et l'autre avec une tension de mesure constante en vue d'une mesure directe de la température, une comparaison des deux courbes de température réelles mesurées étant de préférence effectuée dans le microcontrôleur (19, 119, 219).

4. Procédé selon l'une des revendications précédentes, **caractérisé en ce qu'**une courbe de température réelle mesurée au niveau de la sonde de température (13, 113, 113', 213, 213') est comparée en tant que superposition à une courbe de température de consigne stockée dans la commande ou dans le microcontrôleur (19, 119, 219), une amplitude de la superposition étant de préférence interprétée afin de déduire la température absolue.

5. Dispositif de mesure de température (11, 111, 211) pour un appareil électrique (30), comprenant au moins une sonde de température (13, 113, 113', 213, 213') sous la forme d'une résistance électrique qui peut être alimentée par au moins deux tensions de mesure (U_{ref1}, U_{ref2}) différentes lors d'une permutation cyclique entre les tensions de mesure, la sonde de température étant reliée à une commande qui possède un microcontrôleur (19, 119, 219) et qui est configurée pour alimenter la sonde de température avec au moins deux tensions de mesure (U_{ref1}, U_{ref2}) différentes conformément à un procédé selon l'une des revendications précédentes.

6. Dispositif selon la revendication 5, **caractérisé en ce qu'**il existe au moins deux sondes de température (13, 113, 113', 213, 213') ayant chacune une résistance électrique, les sondes de température étant de préférence différentes ou non identiques et/ou des sondes de température de fabricants différents étant présentes.

7. Dispositif selon la revendication 6, **caractérisé en ce que** les sondes de température (13, 113, 113', 213, 213') ou leurs résistances électriques possèdent respectivement des valeurs de résistance différentes.

8. Dispositif selon la revendication 6 ou 7, **caractérisé en ce que** les sondes de température (13, 113, 113', 213, 213') possèdent des caractéristiques différentes, de préférence concernant la dépendance à la température de la valeur de résistance, notamment une résistance non linéaire et une résistance linéaire, l'une des résistances électriques des deux sondes de température étant de préférence une résistance à CTN ou à CTP en tant que résistance non linéaire.

9. Dispositif selon l'une des revendications 5 à 8, **caractérisé par** au moins deux résistances série (15, 115) différentes avant la ou les sondes de température (13, 113, 113', 213, 213').

10. Dispositif selon l'une des revendications 5 à 9, **caractérisé en ce qu'**il existe une résistance de référence (R_{ref1}, R_{ref2}) pour une sonde de température (13, 113, 113', 213, 213'), notamment sous la forme d'une résistance électrique faisant office de valeur comparative pour la sonde de température, plusieurs résistances de référence (R_{ref1}, R_{ref2}) différentes étant de préférence présentes et un dispositif de commutation (Tr1, Tr2) servant à la permutation entre les résistances de référence étant prévu.

11. Dispositif selon l'une des revendications 5 à 10, **caractérisé par** un condensateur d'intégration (Cᵢₙₜ), une résistance électrique en tant que sonde de température (13, 113, 113', 213, 213'), une résistance de référence (R_{ref1}, R_{ref2}) et un circuit compteur pour une commutation du dispositif de mesure de température (11, 111, 211).

12. Dispositif selon l'une des revendications 5 à 11, **caractérisé par** un multiplexeur (122) intégré dans la commande ou dans le microcontrôleur (119).

13. Dispositif selon l'une des revendications 5 à 12, **caractérisé en ce que** la commande ou le microcontrôleur (19, 119, 219) possède une mémoire (21, 121, 221) dans laquelle est enregistrée au moins une courbe de température de consigne à attendre pour la sonde de température (13, 113, 113', 213, 213') durant le fonctionnement de l'appareil électrique (30), le dispositif (11, 111, 211) ou le microcontrôleur (19, 119, 219) étant configuré pour comparer la courbe de température réelle mesurée au niveau de la sonde de température (13, 113, 113', 213, 213') avec la courbe de température de consigne enregistrée dans la commande ou dans le microcontrôleur (19, 119, 219).

14. Appareil électrique (30) comprenant un dispositif de mesure de température (11, 111, 211) selon l'une des revendications 5 à 13, **caractérisé en ce qu'**il possède un chauffage électrique (27) pour une chambre de chauffe, la température dans la chambre de chauffe étant mesurée ou surveillée avec la sonde de température (13, 113, 113', 213, 213'), le cas échéant conjointement avec un milieu tel qu'un fluide dans la chambre de chauffe.
